# FASCICULE DE BREVET EUROPEEN

(11) **EP 1 984 751 B1**
(45) Date de publication et mention de la délivrance du brevet: **25.08.2010**
(21) Numéro de dépôt: 06777547.8
(22) Date de dépôt: 03.07.2006
(51) Int. Cl.: G01S 13/00, G08B 13/187

(54) **DISPOSITIF RADIOELECTRIQUE BISTATIQUE POUR REALISER UNE BARRIERE DE DETECTION D'INTRUSIONS**
BISTATISCHE RADIOELEKTRISCHE EINRICHTUNG ZUR HERSTELLUNG EINER EINDRINGDETEKTIONSBARRIERE
BISTATIC RADIOELECTRIC DEVICE FOR PRODUCING AN INTRUSION DETECTING BARRIER

(30) Priorité: 08.07.2005 FR 0507325
(43) Date de publication de la demande: 29.10.2008
(73) Titulaire: THALES, 92200 Neuilly sur Seine (FR)
(72) Inventeur: MAINTOUX, Jean-Jacques, F-78140 Velizy (FR)
(74) Mandataire: Lucas, Laurent Jacques
(86) Numéro de dépôt international: PCT/EP2006/063791
(87) Numéro de publication internationale: WO 2007/006678

(56) Documents cités:
- DE-A1- 2 450 732
- GB-A- 2 303 266
- US-A- 4 595 924
- US-A- 5 173 704
- US-A- 5 291 209
- CHEAL J ET AL: "Intrepid digital microwave a new approach to bistatic radar" SECURITY TECHNOLOGY, 2000. PROCEEDINGS. IEEE 34TH ANNUAL 2000 INTERNATIONAL CARNAHAN CONFERENCE ON OCTOBER 23-25, 2000, PISCATAWAY, NJ, USA,IEEE, 23 octobre 2000 (2000-10-23), pages 17-21, XP010527836 ISBN: 0-7803-5965-8
- BLATTMAN D A ED - SANSON L D: "Technological advances allowing integrated physical protection systems to be rapidly deployed and reused with multi-mode performance by unskilled personnel" SECURITY TECHNOLOGY, 1996. 30TH ANNUAL 1996 INTERNATIONAL CARNAHAN CONFERENCE LEXINGTON, KY, USA 2-4 OCT. 1996, NEW YORK, NY, USA,IEEE, US, 2 octobre 1996 (1996-10-02), pages 232-243, XP010199894 ISBN: 0-7803-3537-6

## Description

### DOMAINE DE L'INVENTION

La présente invention concerne le domaine de la protection de zones géographiques contre les intrusions indésirables, voire hostiles, d'objets mobiles susceptibles de menacer des installations ou des personnes situées dans ces zones. Elle concerne plus particulièrement la protection de zones de mise en oeuvre et d'expérimentation d'équipements vulnérables, dont la destruction peut s'avérer dangereuse pour les populations situées à proximité.

### CONTEXTE DE L'INVENTION - ART ANTERIEUR

Pour protéger un espace ou une zone géographique déterminés, il est connu de former un périmètre de sécurité protégé par des barrières réalisées de façons diverses. Ces barrières ont en particulier pour rôle de détecter leur franchissement éventuel par des acteurs indésirables. Parmi ces barrières ont peut distinguer celles qui ont une structure matérielle telles que les clôtures et autres murs d'enceinte, et celles qui ont une structure immatérielle telles que par exemple les barrières acoustiques ou électromagnétiques. La fonction de ce deuxième type de barrières étant de détecter les intrusions de manière aussi sûre et discrète que possible. On peut d'autre part protéger un espace en utilisant des moyens de détection électromagnétiques de type radar par exemple qui couvrent l'ensemble de l'espace à protéger.
La protection par radar présente l'avantage de permettre une couverture large pouvant inclure une zone de détection d'intrusion située à l'extérieur de la zone à protéger. En revanche, de par son principe de fonctionnement et les fréquences mises en oeuvre, la protection offerte par un radar présente des limites liées en particulier, en fonction de la fréquence de travail mise en jeu, à la nature du terrain de la zone à protéger, ainsi qu'à la présence éventuelle d'une végétation importante comme des arbres par exemple. C'est pourquoi la protection par radar s'avère peu efficace pour lorsqu'on souhaite réaliser une détection d'intrusion au niveau du sol ou à très basse altitude. Hors, ce domaine d'évolution qui s'étend du sol à une altitude inférieure à une centaine de mètres de hauteur par exemple, est le domaine d'évolution de certaines menaces aériennes telles que certains Drones ou ULM par exemple.

L'utilisation de barrières formées de réseaux de capteurs infrarouges ou encore de barrières telles que des clôtures électrifiées présente quant à elle l'avantage de permettre d'empêcher une intrusion par voie terrestre. En revanche, elle ne permet pas d'empêcher l'intrusion d'objets volant à très basse altitude. D'autre part, ce type de protection est par nature peu mobile et très vulnérable car visible.

Un autre moyen pour constituer une barrière de protection consiste à utiliser des dispositifs radioélectriques bistatiques permettant de former des barrières de détection dont l'efficacité s'étend du niveau du sol à une altitude suffisante pour couvrir le domaine d'évolution des menaces non détectables par un radar. De tels dispositifs se composent généralement d'un émetteur équipé d'une antenne directive émettant un signal vers un récepteur équipé d'une antenne directive pointant en direction de l'émetteur. Ces dispositifs permettent de réaliser des barrières relativement efficaces et dont les dimensions tant en hauteur qu'en longueur et en épaisseur peuvent être adaptées aux besoins en définissant les diagrammes de rayonnement correspondants. Ils présentent en outre l'avantage d'être aisément déployables et permettent de mettre rapidement en place des barrières mobiles de protection temporaires autour de sites temporairement dangereux ou vulnérables. Néanmoins ces barrières présentent l'inconvénient de procéder à de fausses détections qui conduisent à de fausses alarmes d'intrusion. Ces fausses alarmes sont principalement dues à la présence de lobes secondaires sur les diagrammes de rayonnement des antennes d'émission et de réception. Ces lobes secondaires sont en particulier responsables de la détection d'objets non intrusifs qui sont vus comme franchissant la barrière.

Le document de brevet US 5,173,704 décrit, dans le cadre d'un système radar bistatique, l'utilisation d'une antenne de réception auxiliaire, directive, orientée en direction de l'émetteur et associée à une voie de réception auxiliaire pour supprimer l'influence du signal de trajet direct sur la réception des échos utiles par l'antenne de réception principale. Selon D1, l'antenne auxiliaire est localisée au voisinage de l'antenne de réception principale. La voie de réception auxiliaire permet de mesurer la puissance de signal provenant de l'émetteur par trajet direct à proximité de l'antenne de réception principale. Il est par suite possible de retrancher cette mesure de celle effectuée par l'antenne principale de façon à ne conserver que le signal cible.

Le document de brevet US 5,291,209 décrit un procédé de traitement permettant, dans le contexte d'un radar monostatique comportant une antenne auxiliaire destiné à éliminer les réceptions de signaux parasites par les lobes secondaires de l'antenne principale, de minimiser l'influence de signaux de fort niveau, pénétrant la voie de réception du radar par le lobe principal de l'antenne principale mais dont le niveau est tel qu'ils sont également captés par les lobes secondaire de l'antenne principale. Le procédé décrit consiste en particulier à inhiber la fonction de traitement de lobes secondaires en présence de ces signaux de fort niveau.

La demande de brevet anglais publiée sous la référence GB 2303 266 décrit un système radar monostatique comportant une antenne principale directive comportant une pluralité d'éléments rayonnants permettant de constituer différentes voies de réception dans des directions différentes, une voie "somme" et deux voies "différence" par exemple. Selon ce document l'antenne principale est associée à une antenne auxiliaire omnidirectionnelle permettant de former une voie de réception auxiliaire. Le système décrit comporte en outre un circuit discriminateur qui permet de déterminer à partir des signaux fournis par les différentes voies de l'antenne principale et par la voie auxiliaire si le signal reçu est reçu par le lobe principale de l'antenne principale, lobe qui correspond à la voie "somme" de l'antenne principale ou par un des lobes secondaires de cette antenne.

### PRESENTATION DE L'INVENTION

Un but de l'invention est d'augmenter la qualité de détection des barrières radioélectriques bistatiques afin de diminuer le nombre de fausse alarmes d'intrusion tout en conservant les qualités attachées à ce type de barrières. A cet effet l'invention a pour objet une barrière de détection radioélectrique bistatique comportant des moyens pour émettre une ou plusieurs ondes au travers d'une antenne directive et des moyens pour recevoir des signaux au travers d'une antenne directive pointé dans la direction d'émission. Cette antenne est **caractérisée en ce qu**'elle comporte en outre des moyens pour émettre une onde au travers d'une antenne non directive et des moyens pour comparer les niveaux relatifs des échos reçus provenant de l'onde émise par l'antenne d'émission directive et des échos provenant de l'onde émise par l'antenne d'émission non directive, le résultat de la comparaison permettant d'identifier les échos issus d'une onde émise dans la direction des lobes secondaires de l'antenne d'émission directive.

Dans un mode préféré de réalisation, les ondes émises sont des ondes CW.

Selon une variante de réalisation, le dispositif selon l'invention comporte en outre des moyens pour supprimer les échos reçus par les moyens de réception au travers des lobes secondaires de l'antenne directive de réception.

Dans un mode préféré de réalisation, le gain de l'antenne d'émission non directive dans la direction pointée par les lobes secondaires de l'antenne d'émission directive est compris entre le gain de l'antenne d'émission directive dans la direction des lobes secondaires et le gain de cette même antenne dans la direction du lobe principal.

Selon une variante de réalisation les moyens pour émettre l'onde directive et les moyens pour émettre l'onde non directive sont synchronisés par un signal périodique de façon à émettre en alternance une onde directive et une onde non directive.

Selon une variante de réalisation l'émission en alternance d'une onde directive et d'une onde non directive est mise en oeuvre lorsqu'une intrusion est détectée, l'émission d'une onde directive étant permanente en l'absence de détection.

Selon une variante de réalisation les moyens pour émettre l'onde directive et les moyens pour émettre l'onde non directive émettent simultanément des ondes de fréquence distinctes.

Dans un mode préféré de réalisation la fréquence de l'onde directive CW émise peut varier au cours du temps.

Dans un autre mode préféré de réalisation les moyens pour émettre au moins une onde directive émettent simultanément deux ondes CW de fréquences différentes.

### DESCRIPTION DES FIGURES

D'autres caractéristiques et avantages apparaîtront clairement au travers de la description qui suit, description illustrée par les figures annexées qui représentent:
- la figure 1, une illustration du problème posé par l'emploi de barrières bistatiques selon l'art antérieur connu,
- la figure 2, L'illustration schématique du principe de fonctionnement d'une barrière radioélectrique bistatique selon l'invention,
- la figure 3, la représentation sur un même diagramme des courbes de variation de gain en fonction de l'azimut des antennes directive et non directive selon l'invention,
- la figure 4, l'illustration schématique d'une forme de réalisation des moyens d'émission d'une barrière selon l'invention prise comme exemple non limitatif
- la figure 5 l'illustration schématique d'une deuxième forme de réalisation des moyens d'émission d'une barrière selon l'invention,
- La figure 6 l'illustration du principe de mise en oeuvre de barrières selon l'invention pour protéger une zone limitée par un périmètre fixé.

### DESCRIPTION DETAILLEE

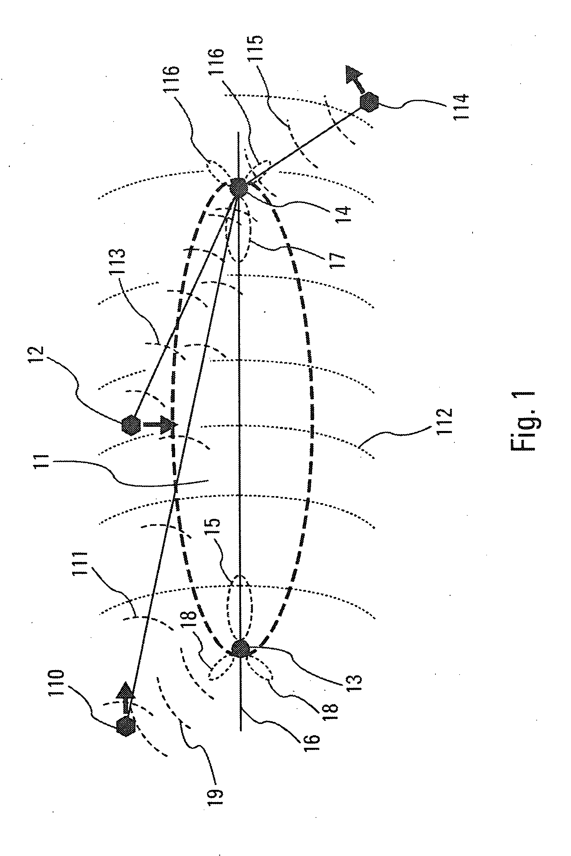

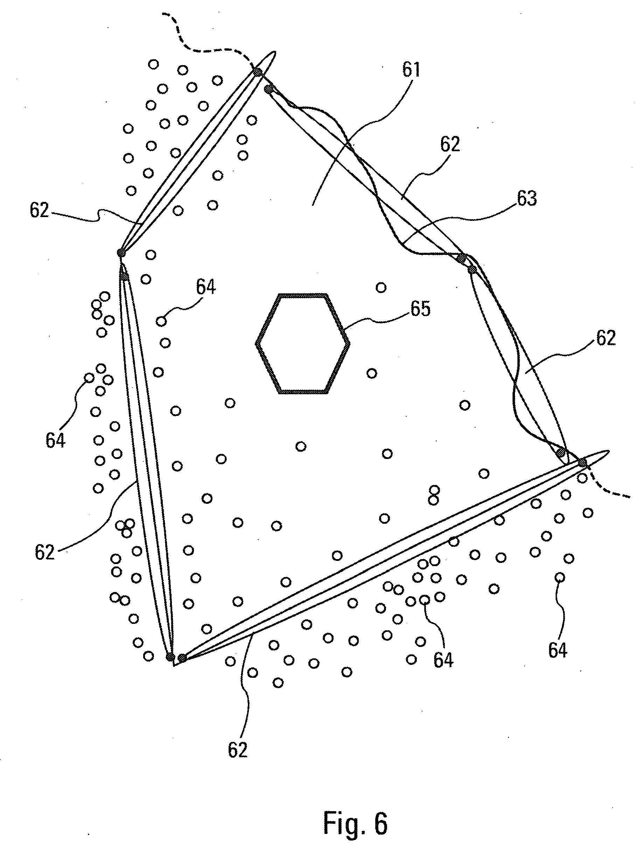

On s'intéresse tout d'abord à la figure 1 qui permet de mettre en évidence de manière simple le problème posé par les barrières bistatiques existantes. Comme l'illustre la figure 1, une telle barrière est destinée à constituer une zone de détection périmétrique 11 entourant la zone géographique dont on souhaite contrôler les accès. Son rôle principal consiste à détecter l'entrée d'objets 12 dans la zone de détection 11 puis éventuellement à préciser les paramètres d'évolution de l'objet détecté, le but étant de déclancher une alarme en cas d'entrée illicite d'un objet dans cette zone, et cela avec la meilleure fiabilité possible.
Une zone géographique 61 sensible autour d'un bâtiment 65, en bordure d'une côte 63 et adossée à zone plantée d'arbres 64 par exemple, peut de cette façon être protégée contre les intrusions. Il suffit pour cela, comme l'illustre la figure 6, d'implanter un ensemble de barrières 62 le long du périmètre qui définit la zone à protéger.

La mise en oeuvre d'une telle barrière nécessite principalement l'emploi de moyens d'émission 13 et de réception 14. Les moyens d'émission 13 ont pour principale caractéristique d'être équipés d'une antenne directive dont le lobe principal 15 du diagramme de rayonnement permet de couvrir de la manière la plus sélective possible le domaine de l'espace qui forme la zone de détection 11. Les moyens de réception 14 comporte quant à eux également une antenne directive dont le diagramme de rayonnement 17 pointe vers les moyens d'émission dans la direction 16 qui matérialise l'axe de la barrière.

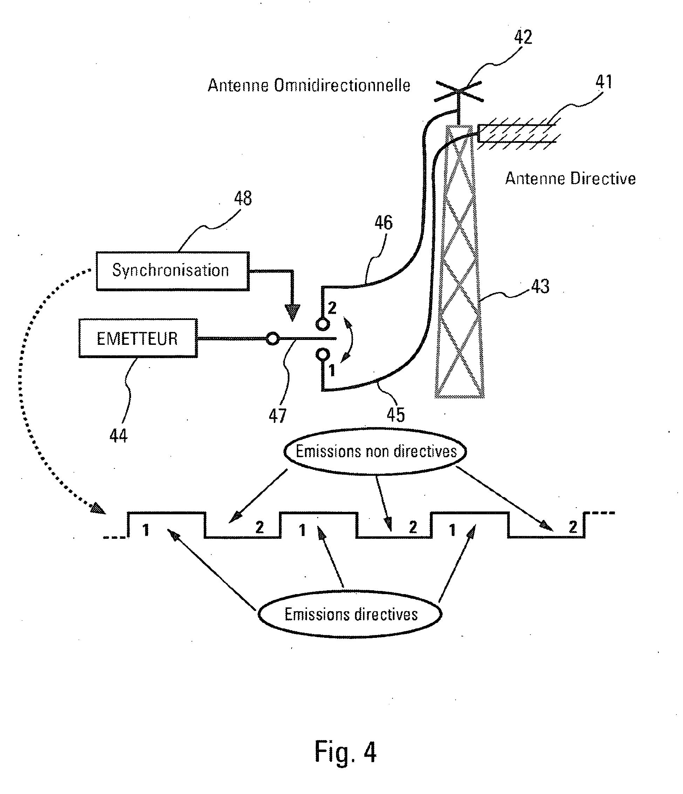

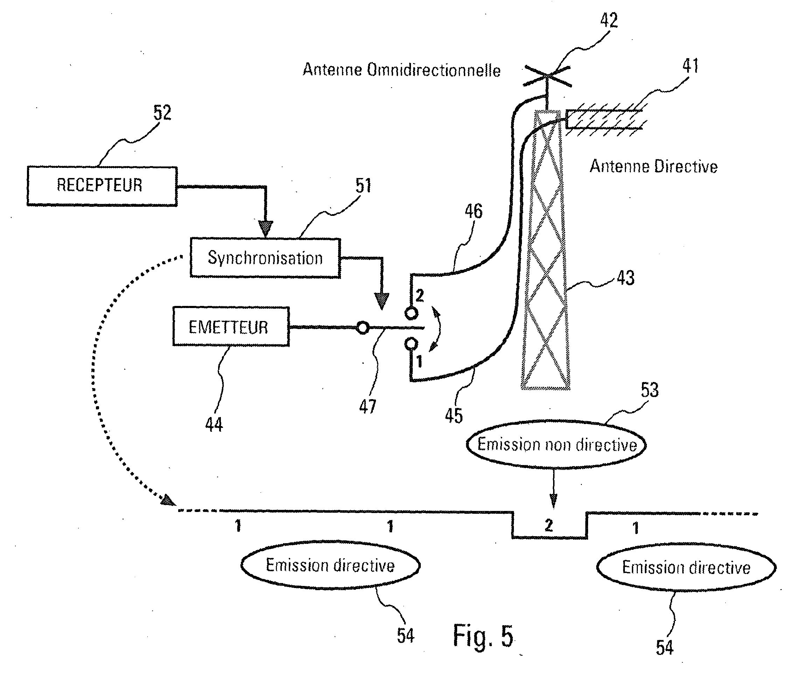

Une telle barrière présente l'avantage d'être peu coûteuse en terme de moyens mis en oeuvre. La forme et la longueur de la barrière dépendent en particulier des diagrammes de rayonnement des antennes utilisées ainsi que des caractéristiques de puissance de l'émetteur 13 et de la situation de l'émetteur 13 et du récepteur 14. Ainsi, pour obtenir une barrière suffisamment longue, il est par exemple possible de placer l'émetteur et le récepteur au sommet de mats ou de tours, comme l'illustre la figure 4 ou 5. Dans la mesure où la barrière de détection est destinée à couvrir une zone de l'espace s'étendant du sol à une faible altitude, cette zone pouvant comporter des éléments de relief et de végétation, tels que des arbres par exemple, la fréquence d'émission de l'émetteur constituant une telle barrière se situe généralement dans le domaine VHF ou UHF.
Selon le positionnement de l'émetteur 13 et du récepteur 14, la distance relative qui les sépare, ainsi que la puissance d'émission, il est ainsi possible de réaliser une barrière radioélectrique bistatique de grande longueur, 10 à 20 kilomètres par exemple, en émettant une onde de puissance relativement faible, de l'ordre de quelques dizaines de watts.

Bien que présentant les avantages déjà cités, les barrières bistatiques actuelles présentent néanmoins l'inconvénient important d'être sujettes à un taux de fausses alarmes d'intrusion relativement important. Comme l'illustre la figure 1, ce taux de fausses alarmes a principalement pour origine la présence de lobes secondaires dans les diagrammes de rayonnement des antennes directives des moyens d'émission 13 et des moyens de réception 14.
En ce qui concerne l'antenne des moyens d'émission 13, la principale source de fausse alarme réside dans le rayonnement d'une partie l'onde émise au travers des lobes secondaires 18 de l'antenne. Ce rayonnement est par nature dirigé dans une direction différente de l'axe pointé par le lobe principal et peut être réfléchi par des objets situés bien en dehors de la zone de la barrière.
Cette partie 19 de l'onde émise peut donc se trouver réfléchie vers le récepteur 14 par un objet 110 évoluant hors de la zone à protéger. L'onde 111 ainsi réfléchie est détectée au niveau du récepteur 14 de la même façon que l'onde 113 issue de l'onde 112 émise par le lobe principal et réfléchie par un objet 12 cherchant à franchir la barrière. Au travers de l'onde réfléchie 111, l'objet 110 sera injustement détecté comme un objet tentant de franchir la barrière et sera la cause d'une fausse alarme

En ce qui concerne l'antenne des moyens de réception 14, la principale source de fausse alarme réside dans la réception des ondes réfléchies 115 par tout objet 114 situé à l'arrière des moyens de réception 14 et issues de l'onde 112 émise par le lobe principal. Ces ondes réfléchies bien que provenant d'un objet 114 évoluant hors de la zone à protéger, sans tenter de franchir la barrière, sont captées par les lobes secondaires 116 de l'antenne de réception. De la sorte, comme les objets 110 soumis aux émissions issues des lobes secondaires de l'antenne d'émission, l'objet 114 sera injustement détecté comme un objet tentant de franchir la barrière et sera la cause d'une fausse alarme.

La fonction de détection assurée par une barrière radioélectrique classique se trouve ainsi soumise à deux types de perturbations:
- une perturbation liée à une pollution des moyens de réception par les signaux issus des parties de l'onde émise au travers des lobes secondaires 18 de l'antenne d'émission,
- une perturbation liée à une pollution des moyens de réception par les signaux issus des ondes reçues par les lobes secondaires 116 de l'antenne de réception.
Ces deux pollutions d'origines différentes sont les principales causes de fausse alarmes d'intrusion.

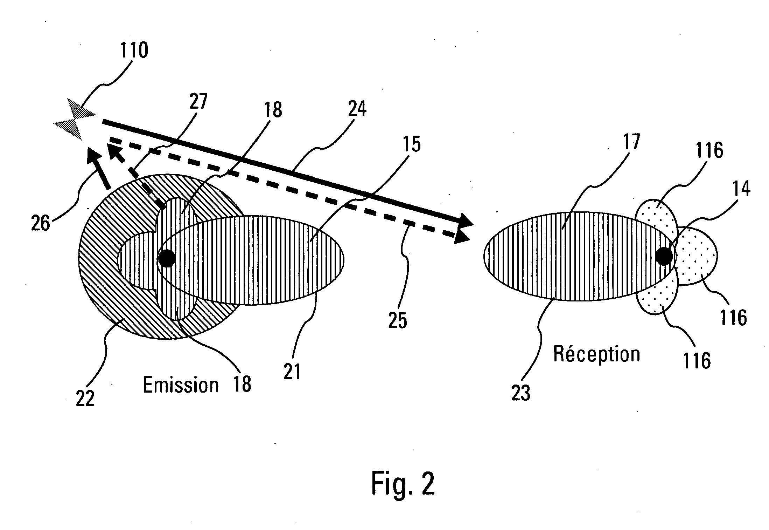

On s'intéresse à présent à la figure 2. Cette figure permet d'illustrer de manière simple les caractéristiques techniques de la barrière bistatique selon l'invention.
Pour pouvoir résoudre le problème posé par la présence de lobes secondaire sur les diagrammes de rayonnement des antennes d'émission et de réception, la barrière bistatique selon l'invention disposes de moyens d'émission principaux 13 pouvant émettre l'onde 112 qui constitue la barrière. De manière connue ces moyens comportent une antenne dont le diagramme 21 est directif, le lobe principal de ce diagramme étant dirigé vers les moyens de réception 14.
La barrière bistatique selon l'invention comporte également des moyens d'émission auxiliaires pouvant émettre une onde de manière non directive.
Ces deuxièmes moyens comportent une antenne pourvue d'un diagramme de rayonnement non directif 22, omnidirectionnel par exemple.
Suivant le mode de réalisation choisi, ces deux moyens d'émission peuvent par exemple être totalement distincts. Ils peuvent également être réalisés à partir d'un émetteur unique pourvu de deux antennes, l'une directive et l'autre non directive, et des moyens de commutation lui permettant d'émettre sur l'une ou l'autre des antennes.
La barrière bistatique selon l'invention comporte également des moyens de réception 14 pourvus d'une antenne possédant un diagramme de rayonnement directif, dont le lobe principal 23 est orienté sensiblement dans la direction du lobe principal 21 de l'antenne directive d'émission.

Selon l'invention, le problème posé par la présence de lobes secondaires sur le diagramme de rayonnement de l'antenne d'émission directive peut être résolu de manière avantageuse grâce aux moyens d'émission auxiliaire. Pour ce faire pour tout signal reçu par l'antenne de réception dans une direction donnée les moyens de réception effectuent la comparaison des niveaux du signal issu de l'émission directive et du niveau du signal issu de l'émission non directive. Selon le mode de fonctionnement des moyens d'émission, ces deux signaux sont reçus simultanément ou l'un après l'autre. Selon le résultat de la comparaison le signal provenant de l'émission principale, via l'antenne directrice, est considéré comme issu d'une émission au travers du lobe principal orienté dans la direction à protéger, ou de l'émission au travers d'un lobe secondaire orienté dans une direction ne présentant pas d'intérêt en terme de protection.
En pratique la comparaison porte sur les niveaux relatifs des signaux reçus.

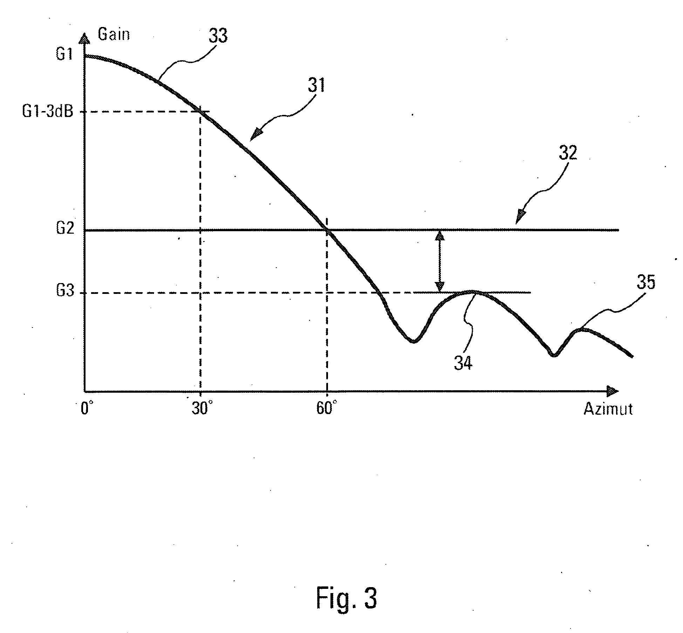

On s'intéresse à présent à la figure 3 qui illustre la façon dont peuvent par exemple être définis les gains respectifs des antennes d'émission directive et non directive, dans le contexte de l'invention.
La figure 3 représente sur un même graphique, en fonction de l'azimut, la courbe de gain 31 de l'antenne directive la courbe de gain 32 de l'antenne non directive. L'azimut 0° représente ici la direction pointée par le lobe principal de l'antenne directive 32.
L'antenne principale, directive, est définie de manière classique par la largeur de son lobe principal 33, à -3dB du gain maximum G₁, ainsi que par la présence de lobes secondaires 34 et 35. L'antenne auxiliaire, omnidirectionnelle, est quant à elle caractérisée par une courbe de gain de valeur constante G₂. Les deux courbes de gain sont définies de façon à ce que le gain G₂ de l'antenne omnidirectionnelle soit inférieur au gain G₁-3dB qui correspond au gain minimum de l'antenne dans l'espace couvert par le lobe principal 33, et supérieur au gain de l'antenne directive dans la direction des lobes secondaires 34 et 35.
Ainsi, si le niveau de signal provenant de l'émission principale directive est supérieur au niveau de signal provenant de l'émission auxiliaire non directive, le signal détecté est considéré comme correspondant à un objet 12 ayant pénétré dans la barrière. Inversement, si le niveau de signal provenant de l'émission principale directive est inférieur au niveau de signal provenant de l'émission auxiliaire non directive, le signal détecté est considéré comme un signal parasite correspondant à un objet 110 non menaçant évoluant hors de la barrière.
La figure 2 illustre le cas particulier d'un objet non menaçant 110 réfléchissant des ondes 24 et 25 issues de l'onde omnidirectionnelle 26 et de l'onde directionnelle 27 émise par un lobe secondaire 18. Ce cas particulier d'écho à l'origine d'une fausse alerte d'intrusion dans les barrières bistatiques existantes, est traité par les moyens de réception 14 de la barrière selon l'invention par comparaison des niveaux relatifs des ondes 24 et 25. Dans cet exemple le niveau de l'onde principale 25 réfléchie par l'objet 110 est supérieur, du fait des gains respectifs des antennes d'émission, au niveau de l'onde réfléchie auxiliaire. L'écho détecté sera donc identifié comme un écho parasite à ne pas prendre en compte.

On s'intéresse à présent à la figure 4. Cette figure illustre un mode de réalisation particulier de la barrière selon l'invention. La figure 4 représente seulement la structure des moyens d'émission, les moyens de réception étant constitués de manière analogue. Dans ce mode de réalisation, pris comme exemple non limitatif, les moyens d'émission sont constitués d'une antenne directive 41 et d'une antenne non directive 42 montées sur un pylône 43. ces deux antennes sont raccordées à un émetteur unique 44 par l'intermédiaire de câbles 45 et 46 et de moyens de commutation commandables 47. L'émetteur produit par exemple une onde UHF CW.
La commutation de l'onde CW vers l'une ou l'autre des antennes est assurée par des moyens de synchronisation qui définissent le séquencement choisi pour émettre sur l'une ou l'autre antenne. Dans l'exemple illustré par la figure 4 l'onde CW est émise alternativement sur l'une des antennes puis sur l'autre. La période de commutation est choisie de façon à ce que les signaux reçus par chacune des antennes puissent être comparés même dans le cas où l'objet à l'origine de ces signaux se déplace.
Les signaux issus de l'onde CW émise sont captés par une antenne directive de réception non représentée sur la figure. Cette antenne de réception est semblable à l'antenne directive d'émission 41. Elle est également montée sur un pylône et est orientée en direction de l'antenne directive d'émission 41. Cette première forme de réalisation présente l'avantage de mettre en oeuvre un séquencement simple, périodique et pouvant fonctionner de manière autonome indépendamment du traitement réalisé sur les signaux reçus. Les moyens d'émission fonctionnent ainsi de manière automatique. En revanche l'onde étant émise périodiquement par l'antenne omnidirectionnelle, la présence de la barrière est plus aisément détectable. C'est pourquoi on peut préférer un autre mode de mise en oeuvre des moyens d'émission, tel que, par exemple, celui décrit à la figure 5.

Les moyens d'émission mis en oeuvre dans le mode de réalisation de la figure 5 comportent comme ceux de la figure 4, une antenne directive 41 et une antenne non directive 42, omnidirectionnelle par exemple, toutes deux montées sur un pylône 43 et reliées à un émetteur 44, au travers d'un commutateur 47 par des câbles 45 et 46. Cependant dans ce mode de réalisation, le commutateur 47 est actionné par des moyens de synchronisation 51 qui reçoivent des informations en provenance des moyens de réception constituant la barrière, du récepteur 52 par exemple. Dans ce mode de réalisation particulier, les moyens de synchronisation actionnent le commutateur 47 de manière asynchrone, lorsqu'un risque de fausse alarme d'intrusion existe. L'émission auxiliaire non directive 53 peut ainsi être commandée lorsque les moyens de réception ont détecté un signal provenant d'un objet susceptible de tenter une intrusion au-delà de la barrière. Tout le reste du temps étant occupé par l'émission principale directive 54 ce mode de réalisation quoiqu'un peu plus complexe s'avère être d'un fonctionnement plus discret rendant la présence de la barrière moins détectable.
Les deux modes particuliers de réalisation illustrés par les figures 4 et 5 ne sont bien entendu pas limitatifs, toute solution permettant de différentier les signaux provenant de l'émission principale de ceux provenant de l'émission auxiliaire pouvant être utilisée. Il est en particulier possible d'effectuer cette distinction en effectuant une différentiation des ondes principale et auxiliaire non pas par l'instant d'émission mais par la fréquence. On peut par exemple émettre de manière simultanée avec deux émetteurs, ou de manière séquentielle avec un émetteur à commutation de fréquence, une onde principale CW de fréquence F₁ et une onde CW auxiliaire de fréquence F₂.

L'utilisation de moyens d'émission comportant deux antennes, une antenne principale, directive, et une antenne auxiliaire non directive, chaque antenne ayant un gain défini dans les différentes directions de l'espace permet avantageusement de limiter le risque de fausse alarme d'intrusion consécutive à l'émission d'une onde au travers des lobes secondaires de l'antenne d'émission principale. Cette caractéristique avantageuse est complétée selon l'invention par l'intégration dans les moyens de réception de moyens capables de détecter et de supprimer les signaux reçus par l'antenne de réception au travers de ses lobes secondaires. Ces moyens mettent en oeuvre des procédés connus, non développés ici, de traitement des signaux reçus, classiquement utilisés notamment dans les radars pour neutraliser les actions de brouillage des radars par les lobes secondaires d'antenne. Parmi ces procédés ont peut citer les procédés de type SLS (suppression des lobes secondaires ) ou OLS (opposition des lobes secondaires). Ces moyens de suppression des signaux reçus par l'antenne de réception au travers de ses lobes secondaires complètent alors avantageusement les moyens de suppression des signaux issus de l'onde émise par les lobes secondaire de l'antenne d'émission. La coopération de ces deux moyens permet ainsi de résoudre de manière globale le problème des fausses alarmes d'intrusion posé par l'emploi de barrières radioélectriques bistatiques.

## Revendications

1. Barrière de détection radioélectrique bistatique comportant des moyens (13) pour émettre au moins une onde au travers d'une antenne directive (21) et des moyens pour recevoir des signaux au travers d'une antenne directive (23) pointé dans la direction d'émission, **caractérisé en ce qu'**elle comporte en outre des moyens pour émettre une onde au travers d'une antenne non directive (22) et des moyens pour comparer les niveaux relatifs des échos reçus provenant de l'onde émise par l'antenne d'émission directive et des échos (24) provenant de l'onde émise par l'antenne d'émission non directive, le résultat de la comparaison permettant d'identifier les échos (25) issus d'une onde émise dans la direction des lobes secondaires (18) de l'antenne d'émission directive.

2. Dispositif selon la revendication 1, dans lequel les ondes émises au travers des antennes directive (41) et non directive (42) sont des ondes CW.

3. Dispositif selon l'une quelconque des revendications 1 à 2, comportant en outre des moyens pour supprimer les échos reçus par les moyens de réception au travers des lobes secondaires de l'antenne directive de réception.

4. Dispositif selon l'une des revendications 1 à 3, dans lequel la valeur du gain G2 (32) de l'antenne d'émission non directive dans la direction pointée par les lobes secondaires de l'antenne d'émission directive est comprise entre la valeur maximum G3 (34, 35) du gain de l'antenne d'émission directive dans la direction des lobes secondaires (18) et une valeur égale au gain maximum G1 (33) de cette même antenne, dans la direction du lobe principal, moins 3dB.

5. Dispositif selon l'une quelconque des revendications 1 à 4, dans lequel les moyens (48, 47, 41) pour émettre l'onde directive et les moyens (48, 47, 42) pour émettre l'onde non directive sont synchronisés (48) par un signal périodique de façon à émettre en alternance une onde directive (1) et une onde non directive (2).

6. Dispositif selon la revendication 5, dans lequel l'émission en alternance d'une onde directive (1) et d'une onde non directive (2) est mise en oeuvre lorsqu'une intrusion est détectée par les moyens de réception (52), l'émission d'une onde directive (1) étant permanente en l'absence de détection.

7. Dispositif selon l'une quelconque des revendications 1 à 4, dans lequel les moyens pour émettre l'onde directive et les moyens pour émettre l'onde non directive sont distincts et émettent simultanément des ondes de fréquence distinctes.

8. Dispositif selon l'une quelconque des revendications 2 à 7, dans lequel la fréquence de l'onde directive CW émise peut varier au cours du temps.

9. Dispositif selon l'une quelconque des revendications 2 à 7, dans lequel les moyens pour émettre au moins une onde directive émettent simultanément deux ondes CW de fréquences différentes.

## Claims

1. A bistatic radio detection barrier comprising means (13) for transmitting at least one wave via a directional antenna (21) and means for receiving signals via a directional antenna (23) pointed in the direction of transmission, **characterised in that** it furthermore comprises means for transmitting a wave via a non-directional antenna (22) and means for comparing the relative levels of the echoes received originating from the wave transmitted by the directional transmitting antenna and the echoes (24) coming from the wave transmitted by the non-directional transmitting antenna, the result of the comparison making it possible to identify the echoes (25) coming from a wave transmitted in the direction of the side lobes (18) of the directional transmitting antenna.

2. A device according to Claim 1, in which the waves transmitted via the directional (41) and non-directional (42) antennas are CW waves.

3. A device according to any one of Claims 1 to 2, furthermore comprising means for eliminating the echoes received by the reception means via the side lobes of the directional receiving antenna.

4. A device according to one of Claims 1 to 3, in which the value of the gain G2 (32) of the non-directional transmitting antenna in the direction pointed by the side lobes of the directional transmitting antenna lies between the maximum value G3 (34, 35) of the gain of the directional transmitting antenna in the direction of the side lobes (18) and a value equal to the maximum gain G1 (33) of this same antenna, in the direction of the main lobe, less 3 dB.

5. A device according to any one of Claims 1 to 4, in which the means (48, 47, 41) for transmitting the directional wave and the means (48, 47, 42) for transmitting the non-directional wave are synchronised (48) by a periodic signal so as to transmit alternately a directional wave (1) and a non-directional wave (2).

6. A device according to Claim 5, in which the alternate transmission of a directional wave (1) and a non-directional wave (2) is carried out when an intrusion is detected by the reception means (52), the transmission of a directional wave (1) being permanent in the absence of any detection.

7. A device according to any one of Claims 1 to 4, in which the means for transmitting the directional wave and the means for transmitting the non-directional wave are separate and transmit simultaneously waves of separate frequencies.

8. A device according to any one of Claims 2 to 7, in which the frequency of the directional CW wave transmitted may vary over time.

9. A device according to any one of Claims 2 to 7, in which the means for transmitting at least one directional wave transmit simultaneously two CW waves of different frequencies.

## Patentansprüche

1. Bistatische radioelektrische Detektionsbarriere, die Mittel (13) zum Emittieren von wenigstens einer Welle über eine gerichtete Antenne (21) sowie Mittel zum Empfangen von Signalen über eine in die Emissionsrichtung zeigende gerichtete Antenne (23) umfasst, **dadurch gekennzeichnet, dass** sie darüber hinaus Mittel zum Emittieren einer Welle über eine ungerichtete Antenne (22) und Mittel zum Vergleichen der relativen Pegel der Echos, die von der Welle kommen, die von der gerichteten Sendeantenne emittiert wird, und von Echos (24) umfasst, die von der Welle kommen, die von der ungerichteten Emissionsantenne emittiert wurde, wobei anhand des Ergebnisses des Vergleichs die Echos (25) erkannt werden können, die von einer Welle kommen, die in der Richtung der Sekundärkeulen (18) der gerichteten Sendeantenne emittiert wurde.

2. Vorrichtung nach Anspruch 1, bei der die über die gerichteten (41) und die ungerichteten (42) Antennen emittierten Wellen CW-Wellen sind.

3. Vorrichtung nach einem der Ansprüche 1 bis 2, die darüber hinaus Mittel zum Unterdrücken der Echos umfasst, die von den Empfangsmitteln über die Sekundärkeulen der gerichteten Empfangsantenne empfangen werden.

4. Vorrichtung nach einem der Ansprüche 1 bis 3, bei der der Wert der Verstärkung G2 (32) der ungerichteten Sendeantenne in der Richtung, in die die Sekundärkeulen der gerichteten Sendeantenne zeigen, zwischen dem Maximalwert G3 (34, 35) der Verstärkung der gerichteten Sendeantenne in der Richtung der Sekundärkeulen (18) und einem Wert liegt, der gleich der maximalen Verstärkung G1 (33) derselben Antenne in der Richtung der Hauptkeule minus 3 dB ist.

5. Vorrichtung nach einem der Ansprüche 1 bis 4, bei der die Mittel (48, 47, 41) zum Emittieren der gerichteten Welle und die Mittel (48, 47, 42) zum Emittieren der ungerichteten Welle von einem periodischen Signal so synchronisiert (48) werden, dass abwechselnd eine gerichtete Welle (1) und eine ungerichtete Welle (2) emittiert werden.

6. Vorrichtung nach Anspruch 5, bei der die abwechselnde Emission einer gerichteten Welle (1) und einer ungerichteten Welle (2) erfolgt, wenn die Empfangsmittel (52) ein Eindringen entdecken, wobei die Emission einer gerichteten Welle (1) immer in Abwesenheit einer Erkennung erfolgt.

7. Vorrichtung nach einem der Ansprüche 1 bis 4, bei der die Mittel zum Emittieren der gerichteten Welle und die Mittel zum Emittieren der ungerichteten Welle getrennt sind und gleichzeitig Wellen mit separaten Frequenzen emittieren.

8. Vorrichtung nach einem der Ansprüche 2 bis 7, bei der die Frequenz der gerichteten CW-Welle im Laufe der Zeit variieren kann.

9. Vorrichtung nach einem der Ansprüche 2 bis 7, bei der die Mittel zum Emittieren von wenigstens einer gerichteten Welle gleichzeitig zwei CW-Wellen von unterschiedlichen Frequenzen emittieren.
